# EUROPEAN PATENT APPLICATION

(11) **EP 0 880 944 A1**
(43) Date of publication of application: **02.12.1998**
(21) Application number: 98830087.7
(22) Date of filing: 23.02.1998
(51) Int. Cl.: A61C 7/10

(54) **Apparatus having screw means for the mandibular distraction**

(30) Priority: 29.05.1997 IT FI970129
(71) Applicant: Leone S.p.A., 50019 Sesto Fiorentino (Firenze) (IT)
(72) Inventor:
(74) Representative: Martini, Lazzaro

(57) **Abstract**

Apparatus having screw means for the mandibular distraction comprising, for each side of the dental arch under treatment, at least two bands (1, 10) capable of being fitted on predetermined dental elements and fixed to corresponding bodies (5, 6) with two parallel guide rods (7) going therethrough and disposed on opposite sides with respect to the expansion screw (2) which drives said bodies (5, 6) away from each other to allow for the corresponding stretching apart of said bands (1, 10), said screw (2) being provided with a driving portion (20) for driving it into rotation under the operator's control to cause the said separation of the orthodontic bands (1, 10) associated to the bodies (5, 6). The driving portion (20) of the screw (2) is arranged, in corrispondence of the head of the screw (2), parallel to said rods (7): the driving portion (20) of the screw (2) facing the mouth of the patient to be engagable by a driving tool (8).

## Description

The present invention refers to an apparatus having screw means for the mandibular distraction.

It is known, in case of transverse deficiency of superior maxilla, to resort to a corrective expansion therapy implemented by applying a fast expansion force of high intensity so as to cause the expansion with fracture and subsequent osteogenesis of the maxillary bone.

To obtain this result use can be made made, for example, of screw devices such as the one disclosed in US patents 4347054 and 4482318, as well as WO 94/10933, and of the screw model A0620 manufactured by the same Applicant.

In case of an expansion in antero-posterior direction concerning both the maxillary and mandibular bones, where no bone sutures to be expanded nor fractures are present, an operating technique of distraction and osteogenesis is applied which uses screws such as the one described in the US patent 5599183 which refers to an apparatus for assembling a device for mandibular distraction.

This type of device comprises, essentially, a plurality of orthodontic bands allowing it to be fixed to predetermined dental elements of both sides of the concerned dental arch, which bands are engaged to expansion screws located externally and sideway thereof so as to be moved away from each other by an expansion operated by rotating a screw-actuating portion by means of pin element to be inserted into holes or cavities suitably provided on a plane orthogonal to the longitudinal axis of each screw. In this way, there is obtained the distraction of the anterior portion from, for example, the posterior one.

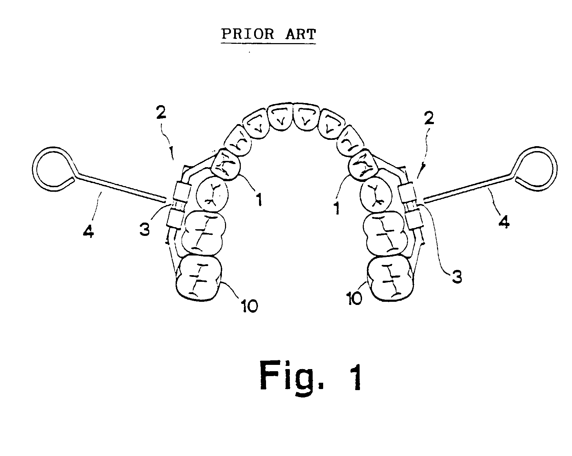

Illustrated in Fig. 1 of the attached drawings is an apparatus of the type mentioned above, wherein (1, 10) indicate the orthodontic bands, (2) is the expansion screws, (3) refers to the acting portion of the same screws and (4) indicates the means for operating the distraction.

However, experience has shown that the operation of the screws of the type above described is very difficult to carry out owing to the small space available between the screws and the inner surface of the corresponding cheeks, and to the consequent reduced visibility for the operator who has to drive the screws.

The main object of the present invention is to overcome the said drawback.
This result has been achieved, according to the invention, by providing an apparatus having the features indicated in the characterizing part of claim 1. Further characteristics being set forth in the dependent claims.

The advantages deriving from the present invention lie essentially in that it is possible to facilitate the expansion of the screw by making the expansion operation easier, safer, more accurate and rapid; that an expansion screw according to the invention is simple to make, cost-effective and reliable even after a prolonged service life.

These and other advantages and characteristics of the invention will be best understood by anyone skilled in the art from a reading of the following description in conjunction with the attached drawings given as a practical exemplification of the invention, but not to be considered in a limitative sense, wherein:
- Fig. 1 is a plan view of an apparatus with expansion screw for orthodontic use of known type;
- Fig. 2A is a plan view of an apparatus with expansion screw for orthodontic use according to the invention, wherein the orthodontic bands exhibit no stretching apart;
- Fig. 2B shows an enlarged detail of the apparatus of Fig. 2A;
- Fig. 2C shows the apparatus of Fig. 2A in which the orthodontic bands are stretched apart to their maximum extent;
- Fig. 3A is a perpsective view of the expansion assembly in an apparatus according to a first embodiment of the invention;
- Fig. 3B shows in detail a guide means for the assembly of Fig. 3A;
- Fig. 3C shows in detail the screw of the assembly of Fig. 3A;
- Fig. 3D is a side view of the assembly of Fig. 3A in a condition of maximum extension;
- Fig. 4A is a perspective view of the expansion assembly in an apparatus according to a further embodiment of the invention;
- Fig. 4B shows in detail a guide rod for the assembly of Fig. 4A;
- Fig. 4C shows in detail the screw of the assembly of Fig. 4A; and
- Fig. 4D is a side view of the assembly of Fig. 4A.

Reduced to its basic structure, and reference being made to the figures of the attached drawings, wherein like or corresponding elements have been designated by the same reference number, an orthodontic retractor according to the invention comprises, for each side of the dental arch under treatment, at least two bands (1, 10) capable of being fitted on predetermined dental elements, for example an anterior band (1) for the first premolar and posterior band (10) for the second molar, fixed to corresponding bodies (5, 6) with two parallel guide rods (7) going therethrough and disposed on opposite sides with respect to the expansion screw (2) which drives said bodies (5, 6) away from each other to allow for the corresponding stretching apart of said bands (1, 10); said screw (2) being provided with means for the rotation thereof under the control of the operator.

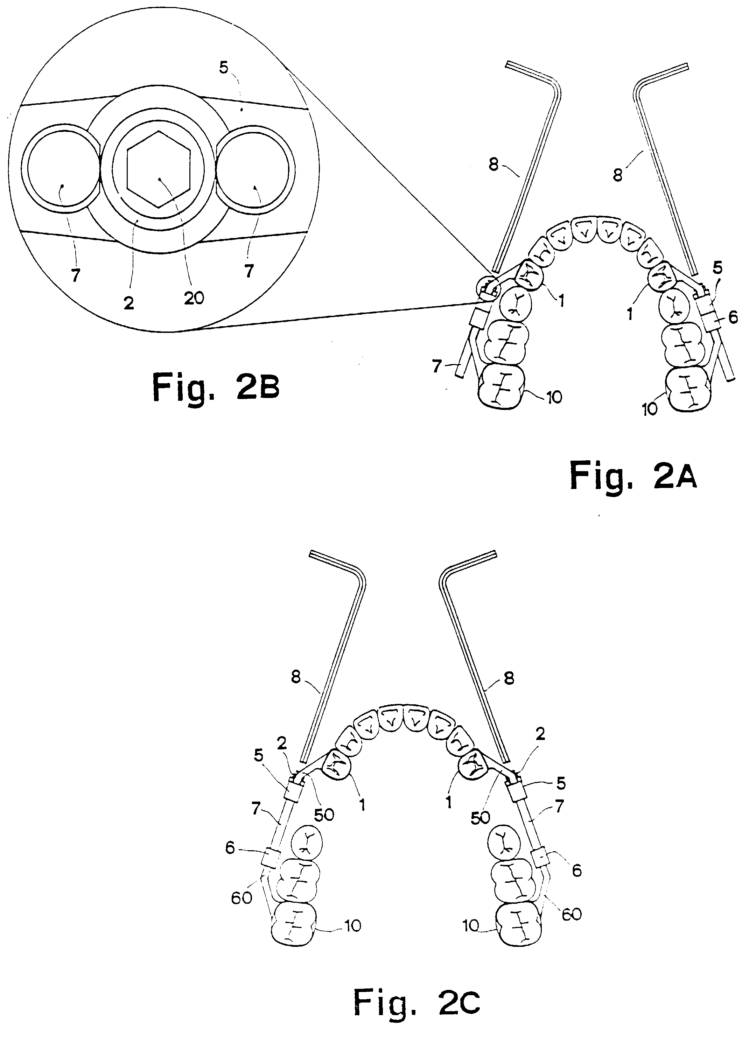

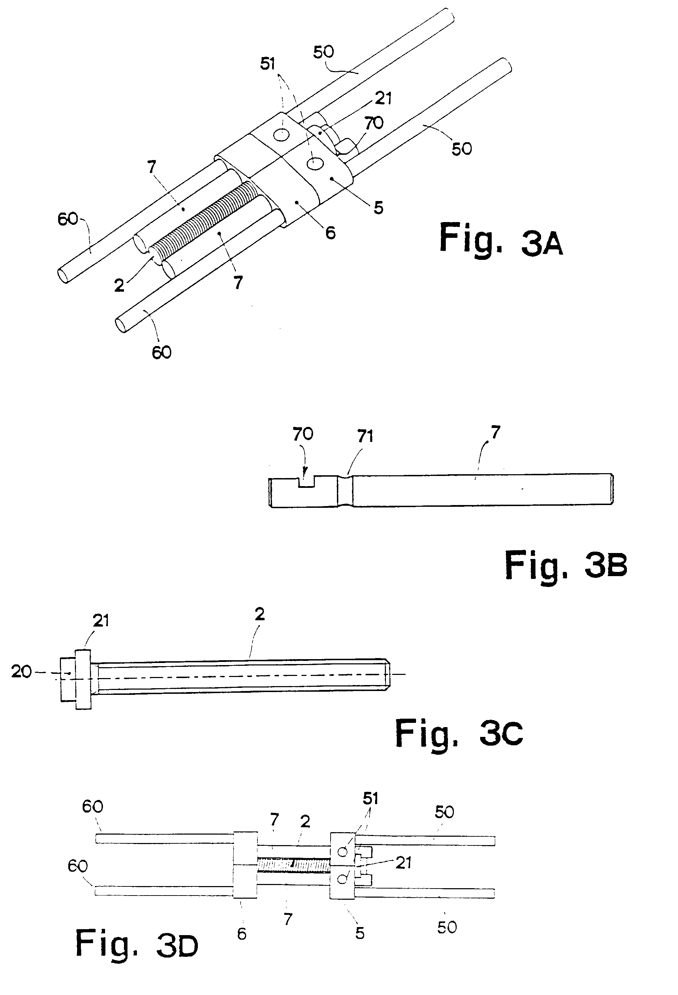

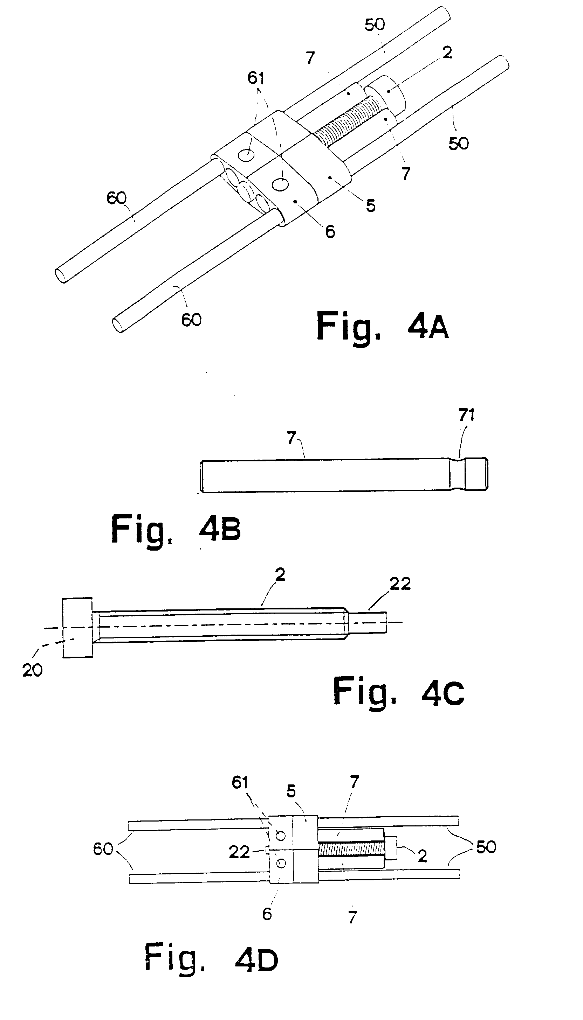

As shown in Figs. 2A and 2C, the body (5) is associated to the anterior band (1) and the body (6) to the posterior band (10). In Figs. 3A, 3D, 4A and 4D the bands (1, 10) are omitted, the figures showing only the extensions (50, 60) of bodies (5, 6) to which the same bands are fixed. As shown in Figs. 2A-2C, said rods are arranged, along the vestibular side of the mandibular arch, parallel to the eaxis which virtually join the centres of the bands (1, 10).

Advantageously, according to the invention, said means for driving the screw (2) consist of a cavity (20) of predetermined shape, located in correspondence of the head of the same screw (2) and to be enegaged by a driving tool (8) whose cross-section has a shape corresponding to that of the said cavity (20): the head of the screw (2) facing the mouth of the patient, so as to facilitate the intraoral activation of the apparatus, with no hindrance to the operator. The longitudinal axis of said cavity (20) is parallel to the rods (7).

As illustrated in Figs. 2A and 2C of the attached drawings, upon activation of the apparatus, the tool (8) can be used to drive the screw (2) with no contact with the cheeks of the patient who, in this way, undergoes the intervention without further discomfort. Moreover, the screw cavity (20) intended to receive the tool (8) is far more visible to the operator than in case of the traditional screws that can be driven only laterally, and not frontally as provided by the present invention.
The cavity (20) provided in the head of said screw (2) may have any suitable shape. Prefereably, the cross-section shape of the cavity (20) is polygonal, as illustrated in Fig. 2B, to allow Allen wrenches to be used as driving tools.

According to the embodiment shown in Figs. 3A-3D of the drawings, of said bodies (5, 6) the anterior one (5) exhibits, when assembled for use and disposed on the mouth side, a central longitudinal through hole with a thread corresponding to that of the screw (2), while the other (6) is only drilled to receive the stem of the screw (2), the head of the latter exhibiting a crown (21), for example of circular shape, to be engaged into a corresponding cavity (70) of the two side guides (7). In this way, by rotating, that is, unscrewing the screw (2) by means of the wrench (8) inserted into the cavity (20), there is obtained the separation of the bodies (5, 6) over the whole travel allowed by the guides (7), as shown in Fig. 3D, and thus the correspondent moving away or stretching apart of the orthodontic bands fixed to the elements (50) and (60). Provided in the body (5) are appendixes (51) to be engaged into corresponding grooves (71) of the guides (71) to act as stop means.

According to the embodiment illustrated in Figs. 4A-4D, of said two bodies (5, 6) associated to the screw (2), the one (5) on the side of the patient's mouth has a central longitudinal through hole with a thread corresponding to that of the screw (2), while the other (6) has a corresponding through hole unthreaded and with an end neck intended to receive a longitudinal end appendix (22) of the screw (2) having a diameter smaller than that of the threaded stem. In this way, the separation of the bodies (5, 6) over the whole travel allowed by the guides (7) is achieved by turning the screw (2) by means of the wrench (8) in the screwing direction. Provided in the body (6) are appendixes (61) intended to engage grooves (71) in the guides (7).

## Claims

1. Apparatus having screw means for the mandibular distraction comprising, for each side of the dental arch under treatment, at least two bands (1, 10) capable of being fitted on predetermined dental elements and fixed to corresponding bodies (5, 6) with two parallel guide rods (7) going therethrough and disposed on opposite sides with respect to the expansion screw (2) which drives said bodies (5, 6) away from each other to allow for the corresponding stretching apart of said bands (1, 10), said screw (2) being provided with a driving portion (20) for driving it into rotation under the operator's control to cause the said separation of the orthodontic bands (1, 10) associated to the bodies (5, 6), characterized in that said driving portion (20) of the screw (2) is arranged, in corrispondence of the head of the screw (2), parallel to said rods (7): the driving portion (20) of the screw (2) facing the mouth of the patient to be engagable by a driving tool (8).

2. Apparatus according to claim 1 characterized in that said driving portion (20) of the screw (2) is a cavity of polygonal shape provided in the head of said screw (2).

3. Apparatus according to claim 1 characterized in that of said bodies (5, 6) the anterior one (5) exhibits, when assembled for use and disposed on the mouth side, a central longitudinal through hole with a thread corresponding to that of the screw (2), while the other (6) is only drilled to receive the stem of the screw (2), the head of the latter exhibiting a crown (21), for example of circular shape, to be engaged into a corresponding cavity (70) of the two side guides (7).

4. Apparatus according to claim 1 characterized in that of said two bodies (5, 6) associated to the screw (2), the one (5) on the side of the patient's mouth has a central longitudinal through hole with a thread corresponding to that of the screw (2), while the other (6) has a corresponding through hole unthreaded and with an end neck intended to receive a longitudinal end appendix (22) of the screw (2) having a diameter smaller than that of the threaded stem.
